# EUROPEAN PATENT APPLICATION

(11) **EP 0 561 432 A1**
(43) Date of publication of application: **22.09.1993**
(21) Application number: 93200167.0
(22) Date of filing: 25.01.1993
(51) Int. Cl.: C08G 12/32

(54) **Diamino-S-triazine-modified melamine-formaldehyde resin composition**

(30) Priority: 29.01.1992 NL 9200158
(71) Applicant: DSM N.V., NL-6411 TE Heerlen (NL)
(72) Inventor: Stijnen, Hubertus Marie Christine, NL-6171 SH Stein (L.) (NL)

(57) **Abstract**

The invention relates to a melamine-formaldehyde resin modified with a diamino-s-triazine, the molar ratio of total formaldehyde to melamine being at most 1.55 and it being possible to produce said resin by reaction of melamine with formaldehyde at elevated temperature in an aqueous medium until the melamine has dissolved, after which the diamino-s-triazine is added to the reaction mixture and the reaction is continued at elevated temperature, the molar ratio of total formaldehyde to melamine being at most 1.55, and the desired amount of melamine being dissolved at a pH of between 8.5 and 9.

## Description

The invention relates to a diamino-s-triazine-modified melamine-formaldehyde resin composition and a method for the preparation thereof.

It is known to improve the processability of melamine-formaldehyde resins by incorporating a resin having a lower curing rate in the resin composition. As a consequence of this, the resin remains fluid for a longer period at elevated temperature and pressure, so that, inter alia, articles with an improved surface and (decorative) top laminates capable of postforming can be obtained. Modifiers of this type include diamino-s-triazine-formaldehyde resins. Examples of these are benzoguanamine- and acetoguanamine-formaldehyde resin. The modified melamine-formaldehyde resins can be obtained by mixing dry modifier resin into a conventional melamine resin, as described in JP-A-71.22848, or by mixing a solution of the modifier resin with a solution of a conventional melamine-formaldehyde resin; see, for example, US-A-3347953 and H. Michand and J. Sacholzer, Kunststoffe 55 (11), 850-853 (1965). In a number of publications the resin composition is obtained either by using, as starting material, a solution in which both melamine and the diamine-s-triazine are present from the start of the methylolation reaction - see FR-A-1489035 and J. Sacholzer, Kunststoffe 69, 263-265 (1979) - or by first methylolating the melamine in the customary manner and then adding the diamine-s-triazine to the resin solution and continuing the methylolation reaction - JP-A-58.180518 - or by first methylolating the diamino-s-triazine and then adding melamine to the resin solution and continuing the methylolation reaction, US-A-3347953.

The modified melamine-formaldehyde resins obtained in the manner described above are used in (decorative) top laminates and as moulding powders for mouldings.

Although these known resin compositions do represent an improvement compared with non-modified melamine-formaldehyde resins, the processability is still restricted and a good combination of mechanical strength and thermal stability and post-formability is difficult to achieve.

The aim of the invention is to provide readily post-formable resin compositions which also have good mechanical properties in the cured state.

The diamino-s-triazine-modified melamine-formaldehyde resin composition according to the invention is characterized in that the molar ratio between total formaldehyde and melamine is at most 1.55.

It has now also been found that a further improvement in the surface characteristics, dimensional stability and water absorption is obtained with the composition according to the invention.

Preferably, the ratio of total formaldehyde to melamine is at most 1.50. More preferably, this ratio is less than 1.45. The ratio is as a rule greater than 1.2.

In a number of the literature references mentioned in the introduction, a very wide range of up to 5 is mentioned for the formaldehyde:melamine ratio for the composition of the modified melamine-formaldehyde resin. However, none of the examples, which are based on the conventional formaldehyde:melamine ratios, use less than 1.6 moles of formaldehyde per mole of melamine.

The diamino-s-triazine:melamine molar ratio in the resin composition can vary within wide limits. On the grounds of cost, the diamino-s-triazine content will preferably be chosen lower than the melamine content, although resin compositions in which the diamino-s-triazine is present in excess with respect to melamine, for example 200 mol% with respect to melamine, have the said advantages and form part of the invention.

The lower limit for the diamino-s-triazine content is about 0.5 mol% with respect to melamine; below this value there is little evidence of the beneficial effect of the modification. The melamine:diamino-s-triazine molar ratio is preferably chosen between 99:1 and 60:40. Preferably, this ratio is between 97:3 and 60:40 and in particular 94:6 - 65:35.

The diamino-s-triazine compounds which can be used in compositions according to the invention are represented by the general formula I 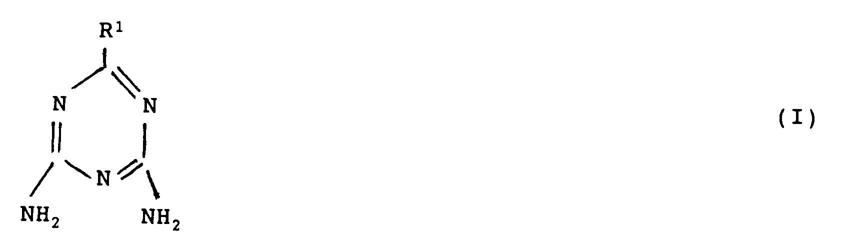
wherein R¹ = H, an alkyl, phenyl, alkylphenyl group or OR², where R² = H or alkyl. The alkyl, phenyl or alkylphenyl group as a rule contains 1-30 carbon atoms, preferably 1-18 and in particular 1-12. R¹ is preferably a methyl or phenyl group, that is to say the diamino-s-triazine is acetoguanamine or benzoguanamine, respectively.

If desired, the resin composition according to the invention can also contain other components for further optimization of the combination of desired properties. Examples of components are lactams, polyalcohols, glycol ethers, carbamides and acrylates, such as, for example, caprolactam, ethylene diglycol, butane-1,4-diol, sorbitol, glucose, trioxytol, urea and thiourea.

This component is as a rule used in amounts of between 1 and 20% by weight, with respect to the amount of melamine, preferably in 5-10% by weight.

For use as a powder for (pressed) mouldings, such as, for example, crockery, the resin composition according to the invention can also contain the conventional fillers, for example aluminium trihydrate, clay, lime, gypsum, wood flour, glass powder, wollastonite, shell meal and kernel meal. Fibre reinforcement can also be used, preferably cellulose fibres, such as, for example, paper or wood chips or glass fibre. Types of paper which can be used are, for example, "kraft paper" (weighing, for example, 120-500 g/m²) or "decor paper" (weighing, for example, 50-200 g/m²). Kraft paper and decor paper are conventional names for types of paper in this sector.

The fillers and/or fibres are used in amounts of up to 80% by weight with respect to the solids in the resin. Preferably, 50-25% by weight of resin is used per 50-75% by weight of filler and fibre reinforcement when the composition is used as a moulding compound. When it is used as a laminate, 20-80% by weight of resin are used per 80-20% by weight of cellulose or paper.

The resin composition according to the invention is very suitable for impregnating sheets of cellulose fibres (paper). This impregnated paper is then, for example, suitable for use in the core of a laminate and also for the top layer. When used as core laminate, a relatively low amount of melamine resin (23-30% by weight) is already found to be suitable.

The resin composition according to the invention can, in principle, be prepared by any method known for melamine-formaldehyde resins, by reaction, in a preferably aqueous solution or suspension, of the s-triazine compounds with formaldehyde at temperatures of up to about 100°C under reflux under atmospheric pressure and in the presence of an alkaline catalyst.

Preferably, melamine is first dissolved in formalin and the diamino-s-triazine is then added to this solution and the methylolation reaction is continued. If desired, the formalin can be prepared by dissolving paraformaldehyde in water. Other additives, for example ethylene glycol, are preferably also added only after the melamine has completely or virtually completely dissolved. Preferably, the formaldehyde solution used has a formaldehyde content of between 15 and 60% by weight, preferably 20-40% by weight. The final concentration of resin in the solution is very suitable for direct impregnation of papers to be used in laminates.

A further advantage of the method obtained is the low free formaldehyde content in the resin, as a result of which fewer environmental problems are encountered during processing.

Preferably, the melamine is dissolved in the formaldehyde solution at a pH of 8.0-9.5, preferably 8.5-9.0, and a temperature of 80-100°C. In general, a reaction time of 20-90 min, preferably 30-50 min, suffices to dissolve the melamine completely or virtually completely. The diamino-s-triazine and, if desired, other modifiers are added and the reaction is continued for 30-150 min, preferably 60-90 min, at 80-100°C, preferably under reflux conditions.

The resin composition can also be produced by using (partially condensed) melamine-formaldehyde and/or diamino-s-triazine-formaldehyde prepolymers as the starting materials.

The modified resin solution obtained can be used directly for impregnating paper laminates or, if desired, can be further thickened by evaporating. A dry resin powder, which is suitable for pressing mouldings, can be obtained by means of, for example, spray-drying.

The invention will now be illustrated with the aid of the following examples and comparative examples, without being restricted thereto. All percentages are percentages by weight unless defined otherwise.

### Example I

An acetoguanamine-modified resin solution with a molar ratio of formaldehyde to melamine (F/M) of 1.49 was prepared by bringing 576 g of 31% formalin to a pH of 8.8 using 1.7 g of 2 N sodium carbonate (Na₂CO₃) and heating this together with 290 g of water and 503 g of melamine at about 95°C until the melamine had dissolved completely.

After the melamine had dissolved, 125 g of acetoguanamine (A) was added and the temperature of 95°C was maintained until the resin solution formed had reached a water-dilutability of about 1.5 (at 20°C). A resin solution having a F/M + A molar ratio of 1.20, which contains 25% by weight of acetoguanamine, calculated with respect to melamine, was obtained in this way.

By adding para-toluenesulphonic acid (pTSA) the B time was adjusted to 210 seconds; the pH was 7.8. (The B time, an indication for the reactivity of the resin solution, is the time which a resin solution heated at 140°C in a closed tube needs to become turbid. The free formaldehyde content is 0.12% (DIN 16746).

### Examples II-III

Core papers (grade 160 g/m², Natron kraft sulphate paper type) with 25% resin (Example II) and 45% resin (Example III). The percentage of volatile compounds was 6% with respect to the impregnated product. After drying in the conventional manner, the laminates were pressed (4 layers) under 8 MPa (80 bar) in the press using a laminate temperature of 120°C and 140°C and cooling.

The laminates obtained in this way were then tested. The results are summarized in Table I.

### Comparative experiment A

Analogously to the method described in Example I, a resin solution having a formaldehyde to melamine ratio of 1.65 was prepared. The amounts used were: 33% of melamine, 13% of formaldehyde, 1.6% of caprolactam and 5.0% of acetoguanamine and 47.4% of demineralized water. The pH at the start of the reaction was 9.4. 0.15% of pTSA was added; the B time was 200 sec. The free formaldehyde content is 0.2% (DIN 16746).

### Comparative experiments B-C

Laminates were prepared and tested analogously to Examples II-III. The results are also given in Table I.

### Example IV

A resin was produced analogously to Example I, 10% of ethylene glycol being added afterwards. 0.16% of pTSA was added (B time 200 sec.).

### Examples V-VI

Laminates were produced and tested analogously to Examples II-III. The results are also given in Table I.

### Example VII

An acetoguanamine-modified resin solution having a F/M molar ratio of 1.40 was prepared by bringing 31.9 kg of 30% formalin to a pH of 8.5 using 2 N sodium carbonate (Na₂CO₃) and heating this together with 35.1 kg of water and 28.7 kg of melamine at about 95°C until the melamine had dissolved completely.

After the melamine had dissolved, 4.3 kg of acetoguanamine was added and the temperature of 95°C was maintained until the resin solution formed had a water-dilutability of about 2.0 (at 20°C). A resin solution having a F/M + A molar ratio of 1.21 and containing 15% by weight of acetoguanamine, calculated with respect to melamine, was obtained in this way.

The B time was adjusted to 210 seconds by adding 0.1% of para-toluenesulphonic acid (pTSA). The free formaldehyde content was 0.10% (DIN 16745).

### Examples VIII-IX

Laminates were produced and tested analogously to Examples II-III.
The results are given in Table I.

**TABLE I**

| Experiment | Temperature °C | F/M | % resin (dry) | post-formability* |
|---|---|---|---|---|
| II | 120 | 1.49 | 25 | 1 |
| III | 120 | 1.49 | 45 | 1 |
| | 140 | 1.49 | 45 | 3 |
| B | 120 | 1.65 | 25 | 4-5 |
| | 140 | 1.65 | 25 | 6 |
| C | 120 | 1.65 | 45 | 4-5 |
| | 140 | 1.65 | 45 | 6 |
| V | 120 | 1.49 | 25 | 1 |
| | 140 | 1.49 | 25 | 1 |
| VI | 120 | 1.49 | 45 | 1 |
| | 140 | 1.49 | 45 | 1 |
| VIII | 140 | 1.40 | 25 | 1 |
| IX | 140 | 1.40 | 45 | 1 |

| | | | | |
|---|---|---|---|---|
| *1 no cracks, 2-3 cracks at the edges 4-5 cracks over the surface 6 not post-formable | | | | |

Of the laminates containing 25% resin other properties were also determined:
the moisture absorption was in all cases 7-10% (water absorption measured in accordance with DIN 53799); the dimensional stability 0.4-0.6% according to ISO 4856; the flexural modulus according to ISO 178 (modulus of elasticity) was 10-15 N/mm².

## Claims

1. Melamine-formaldehyde resin modified with a diamino-s-triazine, characterized in that the molar ratio between total formaldehyde and melamine is at most 1.55.

2. Modified melamine-formaldehyde resin according to claim 1, characterized in that the ratio of total formaldehyde to melamine is at most 1.50.

3. Modified melamine-formaldehyde resin according to either of claims 1 and 2, characterized in that the diamino-s-triazine is acetoguanamine or benzoguanamine.

4. Modified melamine-formaldehyde resin according to any one of claims 1-3, characterized in that the melamine:diamino-s-triazine molar ratio is between 99:1 and 60:40.

5. Modified melamine-formaldehyde resin according to claim 4, characterized in that the melamine:diamino-s-triazine molar ratio is between 97:3 and 60:40.

6. Modified melamine-formaldehyde resin according to claim 5, characterized in that the melamine:diamino-s-triazine molar ratio is between 94:6 and 65:35.

7. Method for the preparation of a diamino-s-triazine-modified melamine-formaldehyde resin by reaction of melamine with formaldehyde at elevated temperature in an aqueous medium until the melamine has dissolved, after which the diamino-s-triazine is added to the reaction mixture and the reaction is continued at elevated temperature, characterized in that the molar ratio of total formaldehyde to melamine is at most 1.55, the desired amount of melamine being dissolved at a pH of between 8.5 and 9.

8. Use in laminates of a resin according to any one of claims 1-6 or a resin obtainable by the method according to claim 7.

9. Resin, method or use as essentially contained in the description and the examples.
